# EUROPÄISCHE PATENTANMELDUNG

(11) **EP 3 100 875 A1**
(43) Veröffentlichungstag der Anmeldung: **07.12.2016**
(21) Anmeldenummer: 16153060.5
(22) Anmeldetag: 28.01.2016
(51) Int. Cl.: B60C 19/08, B60C 11/00

(54) **FAHRZEUGLUFTREIFEN**

(30) Priorität: 19.05.2015 DE 102015209084
(71) Anmelder: Continental Reifen Deutschland GmbH, 30165 Hannover (DE)
(72) Erfinder: Jungk, Juliane, 30916 Isernhagen (DE); Schramm, Joachim, 38112 Braunschweig (DE); Poland, Bridget, 30159 Hannover (DE); Bispo, Miguel, 30177 Hannover (DE); Brinkmeier, Maik, 30453 Hannover (DE); Guardalabene, Joe, 30163 Hannover (DE); Caceres, Angelica, 30161 Hannover (DE)
(74) Vertreter: Finger, Karsten

(57) **Zusammenfassung**

Fahrzeugluftreifen in Radialbauart mit einem Laufstreifen (1) mit einem aus einer Kieselsäure enthaltenden Kautschukmischung hergestellten, elektrisch nicht leitfähigen Laufstreifenteil (5), welcher die Laustreifenprofilierung enthält und welcher in Umfangsrichtung verlaufende schulterseitige Umfangsrillen (6`), welche jeweils eine schulterseitige Profilrippe (7`) laufstreifeninnenseitig begrenzen, aufweist, und mit zumindest einem radial innerhalb des elektrisch nicht leitfähigen Laufstreifenteiles (5) angeordneten elektrisch leitfähigen Lagenteil (9), welcher mit einem den elektrisch nicht leitfähigen Laufstreifenteil (5) bis zur Laufstreifenaußenfläche durchsetzenden elektrisch leitfähigen, in Umfangsrichtung umlaufenden Gummibauteil (8) in Kontakt steht, wobei der Gummibauteil (8) eine elektrisch leitfähige Verbindung zu einem beim Abrollen des Fahrzeugluftreifens mit dem Untergrund in Kontakt tretenden Laufstreifenbereich herstellt, wobei im Laufstreifen (1) zwei elektrisch leitfähige Gummibauteile (8) vorgesehen sind, welche streifenförmig ausgeführt sind, wobei sich jeweils ein Gummibauteil (8) in jeder schulterseitigen Profihippe (7`) befindet.

## Beschreibung

Die Erfindung betrifft einen Fahrzeugluftreifen, insbesondere einen Nutzfahrzeugreifen, in Radialbauart mit einem Laufstreifen mit einem aus einer Kieselsäure enthaltenden Kautschukmischung hergestellten, elektrisch nicht leitfähigen Laufstreifenteil, welcher die Laustreifenprofilierung enthält und welcher in Umfangsrichtung verlaufende schulterseitige Umfangsrillen, welche jeweils eine schulterseitige Profilrippe laufstreifeninnenseitig begrenzen, aufweist, und mit zumindest einem radial innerhalb des elektrisch nicht leitfähigen Laufstreifenteiles angeordneten elektrisch leitfähigen Lagenteil, welcher mit einem den elektrisch nicht leitfähigen Laufstreifenteil bis zur Laufstreifenaußenfläche durchsetzenden elektrisch leitfähigen, in Umfangsrichtung umlaufenden Gummibauteil in Kontakt steht, wobei der Gummibauteil eine elektrisch leitfähige Verbindung zu einem beim Abrollen des Fahrzeugluftreifens mit dem Untergrund in Kontakt tretenden Laufstreifenbereich herstellt.

Ein Reifen der eingangs genannten Art, welcher jedoch ein PKW-Reifen ist, ist beispielsweise aus der DE 10 2011 001 877 A1 bekannt. Der Reifen weist einen in radialer Richtung zweischichtig aufgebauten Laufstreifen mit einer die Laustreifenprofilierung enthaltenden Laufstreifencap und einer radial innerhalb der Laufstreifencap verlaufenden Laufstreifenbase auf. Die Laufstreifenbase weist zumindest zwei Teile auf, einen ersten Teil aus einer rollwiderstandsoptimierten, elektrisch nicht leitfähigen Kautschukmischung und einen zweiten Teil aus einer elektrisch leitfähigen Kautschukmischung, wobei der zweite Teil vorzugsweise in einem der Schulterbereiche positioniert ist. Es ist ferner ein elektrisch leitfähiger Kautschukkeil vorgesehen, welcher die Laufstreifencap bis zur Laufstreifenaußenfläche durchsetzt. Dieser bekannte Reifen soll vor allem einen geringen Rollwiderstand aufweisen.

Es ist bekannt und üblich, in Laufstreifen von Nutzfahrzeugreifen Mischungsverbände bestehend aus einer Laufstreifencap und einer radial innerhalb der Laufstreifencap verlaufenden Laufstreifenbase einzusetzen. Die Laufstreifencap und die Laufstreifenbase sind aus unterschiedlichen Kautschukmischungen gefertigt. Diese Maßnahme gestattet es, bestimmte erwünschte Eigenschaften des Laufstreifens mit Hilfe von unterschiedlichen Mischungssystemen zu verbessern. Beispielsweise kann die Energiedissipation in der Laufstreifenbase reduziert werden, ohne dass die Abriebseigenschaften oder der Nassgriff des Reifens beeinflusst werden.

Zur Erzielung eines niedrigen Rollwiderstandes und eines guten Nassgriffes ist es ferner üblich, Kieselsäuren (Silica) alleine oder in Kombination mit Ruß als Füllstoffe in den Kautschukmischungen der Laufstreifenbase und/oder der Laufstreifencap einzusetzen. Gummibauteile aus Silica enthaltenden Kautschukmischungen weisen im Vergleich zu ausschließlich mit Ruß gefüllten Kautschukmischungen eine deutlich geringere elektrische Leitfähigkeit auf. Um die im Betrieb des Reifens auftretende elektrostatische Aufladung ableiten zu können und unangenehme Entladungsvorgänge zu verhindern, ist es ferner üblich, den Laufstreifen in seinem mittleren Bereich mit einem sogenannten Carbon Center Beam zu versehen. Dieser ist im Allgemeinen ein über den Laufstreifenumfang verlaufender, im Laufstreifen eingebauter streifenförmiger Gummibauteil aus einem elektrisch leitfähigen Gummimaterial, welches beispielsweise aus der rußgefüllten Kautschukmischung der Laufstreifenbase gefertigt ist.

Um die Leitfähigkeit des Reifens sicher zu stellen, ist es maßgebend, dass der Carbon Center Beam keine produktionsbedingten Dickenschwankungen aufweist. Bei Carbon Center Beams muss die Ableitung, die bei LKW Reifen meist über die Seitenwände erfolgt, bis zur Reifenmitte gewährleistet sein, sodass auch an die Ausgestaltung und Leitfähigkeit der Laufstreifebase gewisse Anforderungen gestellt werden. Ein weiterer produktionstechnischer Nachteil von Carbon Center Beams ist, dass je nach Profilgeometrie, d.h. je nach Profilausgestaltung, etwa je nach Anzahl und Breite der Rippen und Umfangsrillen, die Position des Carbon-Center-Beams angepasst bzw. korrigiert werden muss, um sicherzustellen, dass sich die Position jeweils in einer Rippe befindet. Dies führt zu einer hohen Komplexität, da für jedes Produkt separate Schablonen angefertigt werden müssen.

Der Erfindung liegt daher die Aufgabe zu Grunde, bei einem Nutzfahrzeugreifen der eingangs genannten Art die an sich bekannte Silica-Technologie innovativ umzusetzen, um gute Rollwiderstands- und Nassgriffeigenschaften zu erzielen, wobei die beschriebenen Nachteile einer Carbon Center Beam - Konstruktion vermieden werden sollen.

Die gestellte Aufgabe wird erfindungsgemäß dadurch gelöst, dass im Laufstreifen zwei elektrisch leitfähige Gummibauteile vorgesehen sind, welche streifenförmig ausgeführt sind, wobei sich jeweils ein Gummibauteil in jeder schulterseitigen Profilrippe befindet.

Die erfindungsgemäße Anordnung elektrisch leitfähiger streifenförmiger Gummibauteile im Bereich jeder schulterseitig verlaufenden Profilrippe bietet ein alternatives Konzept zur herkömmlichen Carbon Center Beam - Konstruktion. Durch den Einsatz zweier elektrisch leitfähiger "Carbon Shoulder Beams", welche jeweils den elektrisch nicht leitfähigen Laufstreifenteil ausgehend von einem elektrisch leitfähigen "Baseteil" durchsetzen, wird die erforderliche Leitfähigkeit sichergestellt. Durch diese Konstruktion ist die Ausgestaltung des Profils deutlich weniger von Bedeutung, da die Ableitung über die Schulterbereiche des Reifens, nämlich die schulterseitigen Profilrippen, erfolgt. Diese unterliegen bei den meisten Laufstreifenprofilen von Nutzfahrzeugreifen deutlich weniger Variationen in der Ausgestaltung der Profilierung als der mittlere Bereich des Laufstreifens. Des Weiteren ist durch das Vorsehen von zwei Ableitwegen das durch Produktionsschwankungen bestehende Risiko deutlich minimiert.

Weitere erfindungsgemäße Maßnahmen tragen dazu bei, den Rollwiderstand und/oder die Nassgriffeigenschaften zu verbessern.

In diesem Zusammenhang ist es von Vorteil, wenn der Laufstreifen zweischichtig ausgeführt ist und sich aus dem die erste, radial äußere Schicht bildenden, elektrisch nicht leitfähigen Laufstreifenteil und dem die zweite, radial innere Schicht bildenden elektrisch leitfähigen Lagenteil zusammensetzt. Dabei kann gemäß einer bevorzugten

Ausführungsform der Erfindung der elektrisch leitfähige Lagenteil über die gesamte Breite des elektrisch nicht leitfähigen Laufstreifenteiles verlaufen oder es kann der leitfähige Lagenteil in axialer Richtung im mittleren Bereich des Laufstreifens und bis in die Bereiche der schulterseitigen Profilrippen jeweils bis zum streifenförmigen Gummibauteil verlaufen.

Bei einer weiteren bevorzugten Ausführungsform der Erfindung weist der Laufstreifen den elektrisch nicht leitfähigen Laufstreifenteil und zwei schmale Lagenteile, welche jeweils lediglich im Bereich einer der schulterseitigen Profilrippen verlaufen, auf. Bevorzugter Weise verläuft jeder schmale Lagenteil in axialer Richtung bis zur Seitenwand.

Es vereinfacht die Reifenfertigung, wenn die streifenförmigen Gummibauteile aus dem Gummimaterial des elektrisch leitfähigen Lagenteiles bzw. der elektrisch leitfähigen Lagenteile bestehen.

Weitere Merkmale, Vorteile und Einzelheiten der Erfindung werden nun anhand der Zeichnung, die schematisch mehrere Ausführungsbeispiele der Erfindung darstellt, näher beschrieben. Dabei zeigen

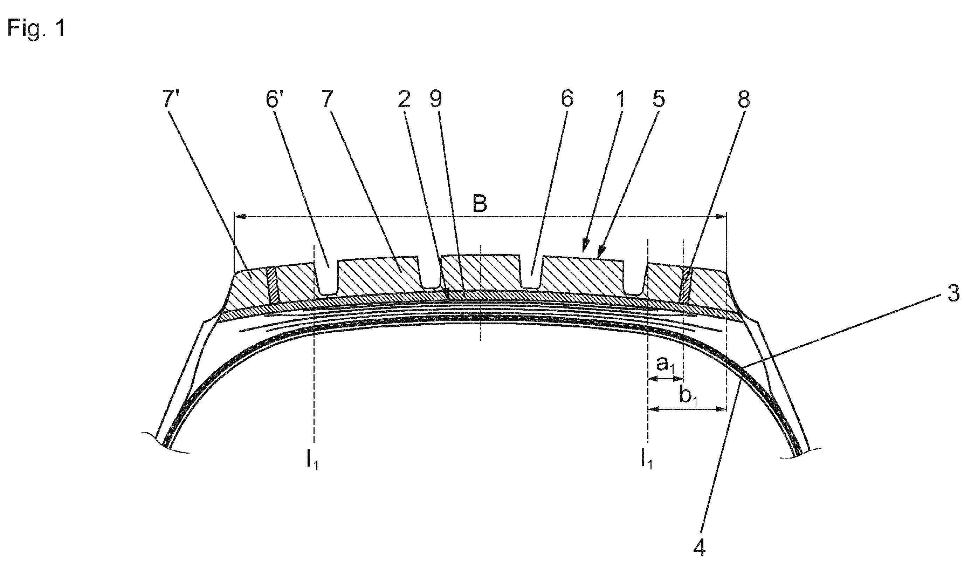

Fig. 1 bis Fig. 3 je einen schematischen Querschnitt durch den Laufstreifenbereich eines Nutzfahrzeugreifens mit unterschiedlichen Ausführungsvarianten der Erfindung.

In Fig. 1 bis Fig. 3 sind von den üblichen Bauteilen eines Nutzfahrzeugreifens in Radialbauart ein Laufstreifen 1, 1' 1", ein radial innerhalb des Laufstreifens 1, 1' 1" verlaufender zumindest dreilagiger, vorzugsweise vierlagiger, Gürtelverband 2, eine mit Festigkeitsträgern verstärkte Radialkarkasse 3 und eine luftdichte Innenschicht 4 dargestellt. Von den nicht bezeichneten Seitenwänden sind lediglich die radial äußeren Endabschnitte gezeigt. Die Wulstbereiche mit Wulstkernen, Kernprofilen und den weiteren üblicherweise in den Wulstbereichen vorgesehenen Verstärkungslagen sind nicht dargestellt.

Bei sämtlichen Ausführungsformen weist der Laufstreifen 1, 1', 1" einen beim Abrollen des Fahrzeugluftreifens mit dem Untergrund in Kontakt tretenden Laufstreifenteil 5, 5', 5" auf. Der Laufstreifenteil 5, 5`, 5" ist aus einer einen hohen Anteil an Silica (Kieselsäure) enthaltenden Kautschukmischung hergestellt und besteht dementsprechend aus einem elektrisch nicht leitfähigen Gummimaterial. Unter einem elektrisch nicht leitfähigen Gummimaterial wird im Rahmen der gegenständlichen Erfindung ein solches verstanden, welches einen elektrischen Widerstand > 1 x 10⁸ Ohm aufweist_{.}

Der Laufstreifen 1, 1' 1" weist ferner eine im Laufstreifenteil 5, 5', 5" ausgebildete Profilierung mit einer Anzahl von mittleren Umfangsrillen 6 und zwei schulterseitigen Umfangsrillen 6' auf, wobei sämtliche Umfangsrillen 6, 6' die für den jeweiligen Nutzfahrzeugreifen übliche maximale Profiltiefe von 8,0 mm bis 12,0 mm aufweisen. Die Umfangsrillen 6, 6' gliedern den Laufstreifen 1 in in Umfangsrichtung umlaufende mittlere Profilrippen 7 und schulterseitige Profilrippen 7', wobei die Profilrippen 7, 7'auch blockartig strukturiert sein können oder aus Profilblöcken bestehen können. Jede schulterseitige Profilrippe 7' weist innerhalb der Bodenaufstandsfläche eine Breite b₁ von 10% bis 25% der Breite B des Laufstreifens 1, 1', 1" im bodenberührenden Teil auf. Die Breite b₁ endet laufstreifeninnenseitig an einer sich in radialer Richtung erstreckenden Ebene, welche durch jene Stellen der laufstreifeninnenseitigen Randkante der schulterseitigen Profilrippe 7' verläuft, welche sich am weitesten laufstreifenaußenseitig befinden. Bei gerade in Umfangsrichtung umlaufenden schulterseitigen Umfangsrillen 6' verläuft diese Ebene entlang der laufstreifeninnenseitigen Randkante. Diese Ebenen sind in den in Fig. 1 bis Fig. 3 gezeigten Schnittdarstellung als Linien 1₁ eingezeichnet.

Bei sämtlichen Ausführungsformen sind die schulterseitigen Profilrippen 7' durch einen sich in radialer Richtung bis zur Laufstreifenaußenfläche erstreckenden und in Umfangsrichtung umlaufenden streifenförmigen Gummibauteil 8, einen sogenannten Carbon Shoulder Beam, in axialer Richtung geteilt. Die streifenförmigen Gummibauteile 8 sind, im Querschnitt betrachtet, jeweils im mittleren Bereich der jeweiligen schulterseitigen Profilrippe 7' angeordnet und weisen von der Linie l₁ einen in axialer Richtung ermittelten Abstand a₁ von vorzugsweise mindestens 1 cm auf. Insbesondere verlaufen die Gummibauteile 8 mittig durch die schulterseitigen Profilrippen 7'. Die streifenförmigen Gummibauteile 8 sind aus einer elektrisch leitfähigen Kautschukmischung gefertigt.

Bei der in Fig. 1 gezeigten Ausführungsvariante ist der Laufstreifen 1 zweischichtig aufgebaut und setzt sich aus dem Laufstreifenteil 5 und einem radial innerhalb des Laufstreifenteiles 5 verlaufenden Lagenteil 9 zusammen, welcher über die gesamte Breite des Laufstreifenteiles 5 verläuft. Bei diesem Aufbau wird von einem Cap/Base-Aufbau gesprochen, wobei der Lagenteil 9 als Laufstreifenbase und der Laufstreifenteil 5 als Laufstreifencap bezeichnet wird. Die dem Lagenteil 9 zugrundeliegende Kautschukmischung enthält als Füllstoff Ruß, in einem derartigen Anteil, dass der Lagenteil 9 elektrisch leitfähig ist. Die beiden streifenförmigen Gummibauteile 8 sind vorzugsweise aus der Kautschukmischung des Lagenteiles 9 gefertigt, kontaktieren den Lagenteil 9 und bilden daher in jeder schulterseitigen Profilrippe 7' eine elektrisch leitfähige Verbindung zur Laufstreifenaußenfläche. Die Ableitung elektrostatischer Aufladungen erfolgt bei dieser Ausführungsvariante beispielsweise über elektrisch leitfähige Seitenwände und die mit der Felge in Kontakt stehenden elektrisch leitfähigen Hornprofile. Sind elektrisch nicht leitfähige Seitenwände vorgesehen, kann die Ableitung über eine zumindest in einer der Seitenwände verlaufende, gesonderte elektrisch leitfähige Passage erfolgen. Sofern der Gürtelverband 2 eine elektrisch leitfähige Gürtelgummierung aufweist, kann die Ableitung elektrostatischer Aufladungen auch über die Karkassgummierung erfolgen.

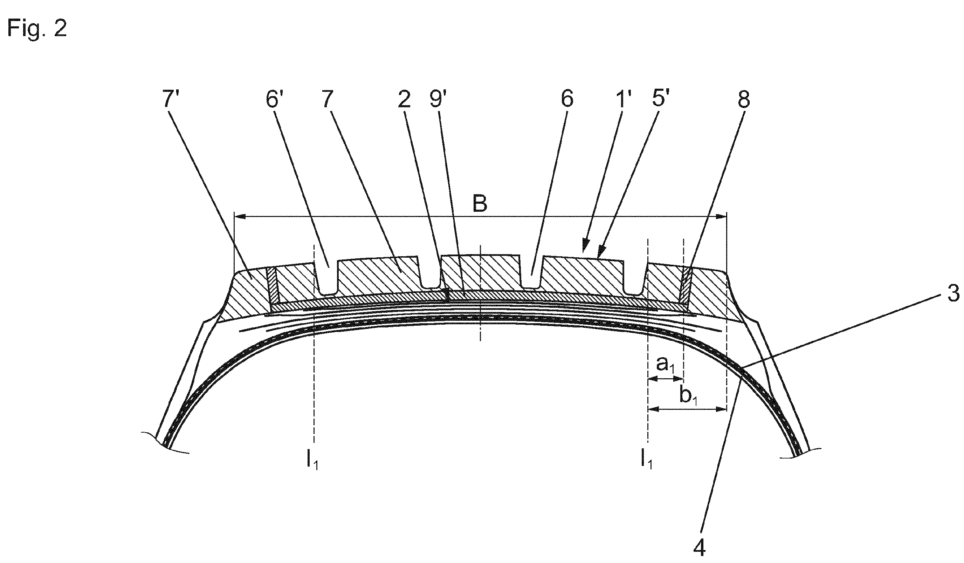

Bei der in Fig. 2 gezeigten Ausführungsvariante weist der Laufstreifen 1' den die Profilierung enthaltenden Laufstreifenteil 5' und einen radial innerhalb des Laufstreifenteiles 5' im mittleren Bereich des Laufstreifens 1' und bis in die Bereiche der schulterseitigen Profilrippen 7' verlaufenden Lagenteil 9' auf. Der Lagenteil 9' erstreckt sich in axialer Richtung jeweils bis zu dem in der jeweiligen schulterseitigen Profilrippe 7' befindlichen streifenförmigen Gummibauteil 8 und steht mit diesem in Kontakt. Der Lagenteil 9' besteht aus einem elektrisch leitfähigen Gummimaterial, welchem eine mit Ruß gefüllte Kautschukmischung zugrunde liegt. Die Ableitung elektrostatischer Aufladungen erfolgt bei dieser Ausführungsvariante vorzugsweise über eine elektrisch leitfähige Gürtelgummierung.

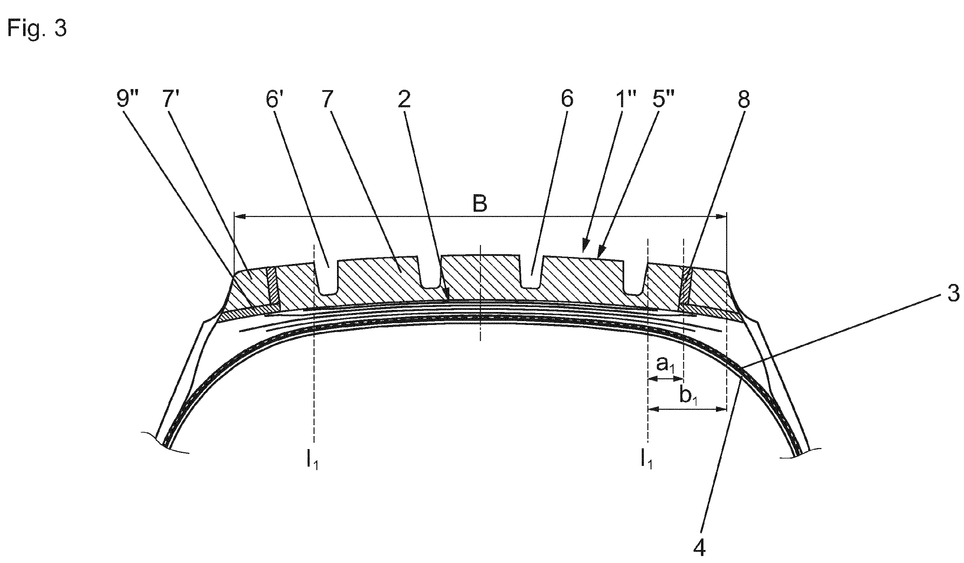

Bei der in Fig. 3 gezeigten Ausführungsvariante weist der Laufstreifen 1" den Laufstreifenteil 5", welcher über den Großteil seiner Erstreckung bis zum Gürtelverband 2 reicht, und zwei radial innerhalb des Laufstreifenteiles 5" angeordnete schmale schulterseitige Lagenteile 9" auf. Die schulterseitigen Lagenteile 9" sind jeweils im Bereich der schulterseitigen Profilrippen 7' angeordnet und erstrecken sich in axialer Richtung vom streifenförmigen Gummibauteil 8 bis zur jeweiligen Seitenwand. Die schulterseitigen Lagenteile 9" sind aus einer elektrisch leitfähigen Kautschukmischung gefertigt. Die streifenförmigen Gummibauteile 8 sind vorzugsweise aus der Kautschukmischung der schulterseitigen Lagenteile 9" gefertigt. Jeder streifenförmige Gummibauteil 8 bildet daher eine elektrisch leitfähige Passage zwischen der Laufstreifenaußenfläche und einem der schulterseitigen Lagenteile 9". Bei dieser Ausführungsvariante sind beispielsweise die Seitenwände aus einem elektrisch leitfähigen Gummimaterial gefertigt, sodass die Ableitung elektrostatischer Aufladungen ermöglicht ist.

### Bezugsziffernliste

1, 1' 1" ........... Laufstreifen
2....................... Gürtelverband
3 ....................... Radialkarkasse
4 ....................... Innenschicht
5 ....................... Laufstreifenteil
6 ....................... Umfangsrille
6'...................... schulterseitige Umfangsrille
7........................ Profilrippe
7'...................... schulterseitige Profilrippe
8 ....................... streifenförmiger Gummibauteil
9, 9',9"...........Lagenteil

## Patentansprüche

1. Fahrzeugluftreifen, insbesondere Nutzfahrzeugreifen, in Radialbauart mit einem Laufstreifen (1, 1' 1") mit einem aus einer Kieselsäure enthaltenden Kautschukmischung hergestellten, elektrisch nicht leitfähigen Laufstreifenteil (5, 5', 5 "), welcher die Laustreifenprofilierung enthält und welcher in Umfangsrichtung verlaufende schulterseitige Umfangsrillen (6'), welche jeweils eine schulterseitige Profilrippe (7') laufstreifeninnenseitig begrenzen, aufweist, und mit zumindest einem radial innerhalb des elektrisch nicht leitfähigen Laufstreifenteiles (5, 5', 5 ") angeordneten elektrisch leitfähigen Lagenteil (9, 9', 9"), welcher mit einem den elektrisch nicht leitfähigen Laufstreifenteil (5, 5', 5 ") bis zur Laufstreifenaußenfläche durchsetzenden elektrisch leitfähigen, in Umfangsrichtung umlaufenden Gummibauteil (8) in Kontakt steht, wobei der Gummibauteil (8) eine elektrisch leitfähige Verbindung zu einem beim Abrollen des Fahrzeugluftreifens mit dem Untergrund in Kontakt tretenden Laufstreifenbereich herstellt,
**dadurch gekennzeichnet,**
**dass** im Laufstreifen (1, 1') zwei elektrisch leitfähige Gummibauteile (8) vorgesehen sind, welche streifenförmig ausgeführt sind, wobei sich jeweils ein Gummibauteil (8) in jeder schulterseitigen Profilrippe (7') befindet.

2. Fahrzeugluftreifen nach Anspruch 1, **dadurch gekennzeichnet, dass** der Laufstreifen (1, 1') zweischichtig ausgeführt ist und sich aus dem die erste, radial äußere Schicht bildenden, elektrisch nicht leitfähigen Laufstreifenteil (5, 5') und dem die zweite, radial innere Schicht bildenden elektrisch leitfähigen Lagenteil (9, 9') zusammensetzt.

3. Fahrzeugluftreifen nach Anspruch 2, **dadurch gekennzeichnet, dass** der elektrisch leitfähige Lagenteil (9) über die gesamte Breite des elektrisch nicht leitfähigen Laufstreifenteiles (5) verläuft.

4. Fahrzeugluftreifen nach Anspruch 2, **dadurch gekennzeichnet, dass** der elektrisch leitfähige Lagenteil (9) in axialer Richtung im mittleren Bereich des Laufstreifens (1') und bis in die Bereiche der schulterseitigen Profilrippen (7') jeweils bis zum streifenförmigen Gummibauteil (8) verläuft.

5. Fahrzeugluftreifen nach Anspruch 1, **dadurch gekennzeichnet, dass** der Laufstreifen (1") den elektrisch nicht leitfähigen Laufstreifenteil (5") und zwei elektrisch leitfähige Lagenteile (9") aufweist, welche jeweils lediglich im Bereich einer der schulterseitigen Profilrippen (7) angeordnet sind.

6. Fahrzeugluftreifen nach Anspruch 5, **dadurch gekennzeichnet, dass** jeder elektrisch leitfähige Lagenteil (9") in axialer Richtung zwischen dem streifenförmigen Gummibauteil (8) und der jeweiligen Seitenwand verläuft.

7. Fahrzeugluftreifen nach einem der Ansprüche 1 bis 6, **dadurch gekennzeichnet, dass** die streifenförmigen Gummibauteile (8) aus dem Gummimaterial des elektrisch leitfähigen Lagenteiles (9, 9', 9") bestehen.
